(19) Europäisches Patentamt

European Patent Office

Office européen des brevets

(11) Veröffentlichungsnummer : **0 195 019**
**B1**

# EUROPÄISCHE PATENTSCHRIFT

(45) Veröffentlichungstag der Patentschrift :
23.03.88

(51) Int. Cl.⁴ : **B 24 B 23/04**

(21) Anmeldenummer : **85904228.5**

(22) Anmeldetag : **23.08.85**

(86) Internationale Anmeldenummer :
**PCT/DE 85/00285**

(87) Internationale Veröffentlichungsnummer :
**WO/8601761 (27.03.86 Gazette 86/07)**

(54) SCHWINGSCHLEIFER.

(30) Priorität : 08.09.84 DE 3433094
17.05.85 DE 3517766

(43) Veröffentlichungstag der Anmeldung :
24.09.86 Patentblatt 86/39

(45) Bekanntmachung des Hinweises auf die Patenterteilung : 23.03.88 Patentblatt 88/12

(84) Benannte Vertragsstaaten :
CH FR GB IT LI NL

(56) Entgegenhaltungen :
DE-A- 2 006 466
FR-A- 2 223 964
US-A- 1 445 857
US-A- 3 533 193

(73) Patentinhaber : **Licentia Patent-Verwaltungs-GmbH**
**Theodor-Stern-Kai 1**
**D-6000 Frankfurt/Main 70 (DE)**

(72) Erfinder : **BRAUN, Roland**
**Petristrasse 34**
**D-7057 Winnenden (DE)**
Erfinder : **KAISER, Bernd**
**Uhlandstrasse 16**
**D-7066 Hohengehren (DE)**
Erfinder : **STÄMMELE, Siegfried**
**Brucknerstrasse 3**
**D-7057 Leutenbach (DE)**

(74) Vertreter : **Wolf, Otto, Dr. Ing. et al**
**Licentia Patent-Verwaltungs-GmbH Theodor-Stern-**
**Kai 1**
**D-6000 Frankfurt 70 (DE)**

**Beschreibung**

Technisches Gebiet

Gegenstand der Erfindung ist ein Schwingschleifer mit einer über elastische Elemente am Gehäuse abgestützten Schleifplatte, die mittels eines durch die Ankerwelle des Antriebsmotors in Drehung versetzbaren, ein Ausgleichsgewicht enthaltenden Antriebsexzenters über ein auf diesem angebrachten Kugellager in eine Hin- und Herbewegung versetzbar ist.

Stand der Technik

Bei bekannten Schwingschleifern dieser Art ist der Antriebsexzenter einschließlich seines Ausgleichsgewichtes fest mit der Ankerwelle des Antriebsmotors verbunden. Der Hub des Antriebsexzenters ist dabei definiert und unveränderbar. Aus diesem Grund eignet sich ein solcher Schwingschleifer je nach der Auslegung seines Exzenterhubs und gegebenenfalls seiner Drehzahl entweder speziell für die Durchführung von Grobschleifarbeiten oder bevorzugt für das Ausführen von Feinschleifarbeiten. Für Grobschleif- und Feinschleifarbeiten finden daher zwei hinsichtlich ihrer Exzentrizität und Drehzahl in der Regel verschieden konzipierte Schwingschleifer Anwendung.

Darstellung der Erfindung

Der Erfindung liegt die Aufgabe zugrunde, einen Schwingschleifer zu schaffen, der sich durch einfache Veränderung des Exzenterhubs in gleichem Maße sowohl für Grob- als auch für Feinschleifarbeiten eignet.

Diese Aufgabe ist erfindungsgemäß dadurch gelöst, daß der Antriebsexzenter über einen ebenfalls exzentrisch zur Ankerwellenachse liegenden Exzenterzapfen angetrieben und die Ankerwelle relativ zum Antriebsexzenter und dessen Ausgleichsgewicht verschwenkbar ist, wobei der Verdrehwinkel zwischen Ankerwelle und Antriebsexzenter in beiden Drehrichtungen durch korrespondierende Anschläge an der Ankerwelle und dem Antriebsexzenter auf 180° begrenzt ist, und daß dem Ausgleichsgewicht des Antriebsexzenters ein Zusatzausgleichsgewicht zugeordnet ist, daß relativ zum Ausgleichsgewicht ebenfalls um 180° verdrehbar ist.

Weiterbildungen und zweckmäßige Ausgestaltungen der Erfindung sind in den Unteransprüchen angegeben.

Zeichnung

Die Erfindung wird im nachstehenden anhand der Zeichnung, die ein Ausführungsbeispiel veranschaulicht, erläutert.

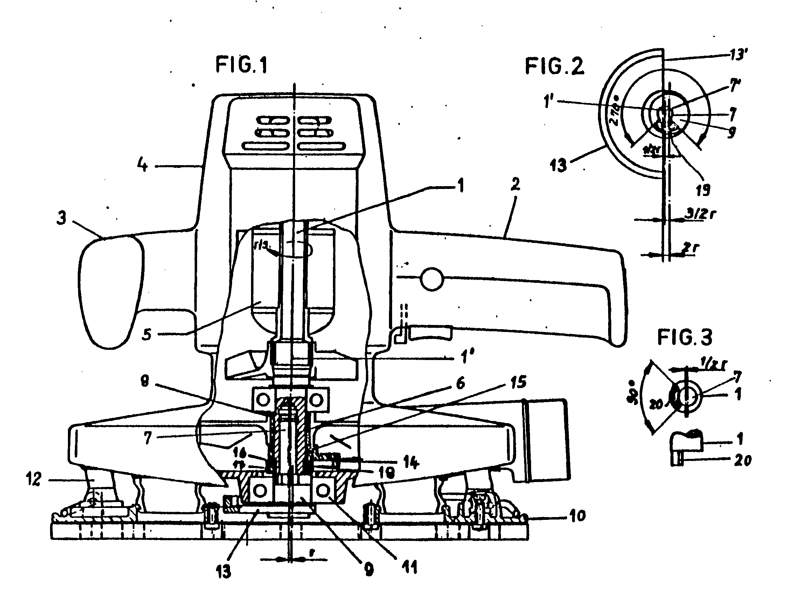

Es zeigen : Fig. 1 einen Schwingschleifer in Seitenansicht teilweise geschnitten und mit einer die Exzentrizität « r » des Antriebsexzenters definierenden Relativlage Ankerwelle — Exzenter mit Ausgleichsgewicht,

Fig. 2 eine Ansicht des Ausgleichsgewichts von oben,

Fig. 3 eine Ansicht des unteren Teils der Ankerwelle mit einem die Verdrehlage des Exzenters relativ zur Ankerwelle begrenzenden Anschlag,

Fig. 4 eine Seitenansicht des Schwingschleifers entsprechend Fig. 1, jedoch mit um 180° gegenüber der Exzenterwelle verdrehter Einheit Antriebsexzenter — Ausgleichsgewicht,

Fig. 5 eine Seitenansicht des Antriebsexzenters mit in dessen Zusatzgewicht drehbar gelagertem Zusatzausgleichsgewicht,

Fig. 6 eine Draufsicht auf den Exzenter gemäß Fig. 5,

Fig. 7 eine Teilansicht der Ankerwelle mit Exzenterzapfen und Antriebsexzenter bei Linkslauf der Ankerwelle, teilweise im Schnitt,

Fig. 8 eine Teilansicht entsprechend Fig. 7, jedoch bei Rechtslauf der Ankerwelle.

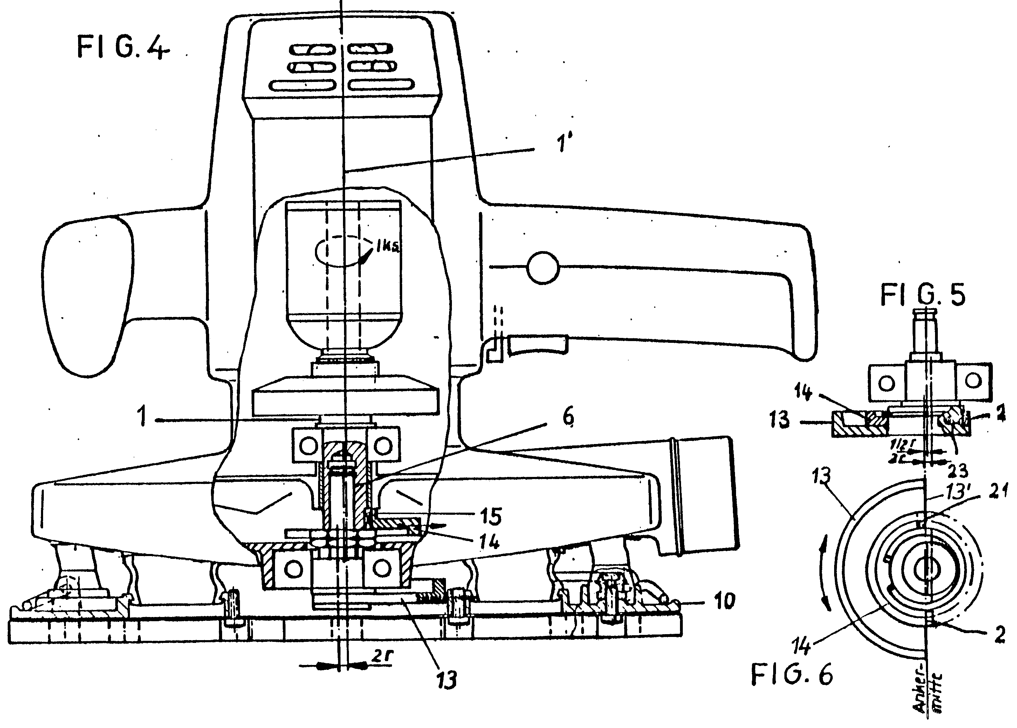

Wie aus den Figuren 1 und 4 ersichtlich ist, weist die Ankerwelle 1 des im mit einem Handgriff 2 und einer Handhabe 3 versehenen Schwingschleifergehäuses 4 vertikal angeordneten Antriebsmotors 5 eine außermittig zu ihrer Längsachse 1' liegende Bohrung 6 auf, in welcher ein Exzenterzapfen 7 verdrehbar gegen axiales Verschieben gesichert geführt ist. Die Sicherung des Exzenterzapfens gegen ein Herausfallen aus der Bohrung 6 in der Ankerwelle kann dabei durch einen Sprengring 8 oder dergleichen Element verwirklicht sein.

Auf dem Antriebsexzenter 9 ist die Schleifplatte 10 mittels eines Kugellagers 11 drehbar gelagert, wobei die Drehbewegung des Antriebsexzenters 9 mit Hilfe der mit der Schleifplatte und dem Schwingschleifergehäuse mechanisch gekoppelten elastischen Stützelemente 12 in eine Hin- und Herbewegung der Schleifplatte umgesetzt wird.

Der Antriebsexzenter 9 ist zur Kompensation der bei der Umsetzung der Rotationsbewegung der Ankerwelle in eine Hin- und Herbewegung der Schleifplatte entstehenden Unwucht mit einem Ausgleichsgewicht 13 versehen.

Ein zusätzliches Ausgleichsgewicht 14 ist verdrehfest auf der Ankerwelle 1 angebracht, beispielsweise durch eine Keilverbindung 15. Zur Sicherung gegen Axialverschiebung des zusätzlichen Ausgleichsgewicht 14 dient eine Mutter 16 mit Kontermutter 17, welche auf die mit dem Außengewinde 18 versehene Ankerwelle aufgeschraubt sind. Das zusätzliche Ausgleichsgewicht 14 steht zum Ausgleichsgewicht 13 im Massenverhältnis 1/2 : 3/2.

Die relative Verdrehbarkeit der beiden Ausgleichsgewichte 13 und 14 ist durch einen Anschlag 19 am Antriebsexzenter 9 und einen Ansatz 20 an der Stirnseite der Ankerwelle 1 auf 180° begrenzt (siehe Fig. 2 und 3).

Wie aus Fig. 2 ersichtlich ist, beträgt die Exzentrizität des Exzenterzapfens 7 bezogen auf die Längsachse 1' der Ankerwelle 1/2r und die Exzentrizität des Antriebsexzenters 9 beläuft sich bezogen auf die Längsachse der Ankerwelle auf 2r, bezogen auf die Längsachse 7' des Exzenterzapfens also 3/2r. Das bedeutet, daß sich im einen Fall (Fig. 1, Rechtslauf der Ankerwelle) eine Gesamtexzentrizität von 3/2r - 1/2r = r ergibt, im anderen Fall (Fig. 4, Linkslauf der Ankerwelle) aufgrund einer 180°-Drehung der Ankerwelle relativ zum Antriebsexzenter bzw. umgekehrt hingegen eine solche von 3/2r + 1/2r = 2r.

Bei der in Fig. 1 dargestellten Rechtslaufposition wirkt das zusätzliche Ausgleichsgewicht 14 dem Ausgleichsgewicht 13 entgegen, so daß der Massenausgleich entsprechend der Exzentrizität wie folgt gegeben ist : $M_A = 3/2 — 1/2 = 1$.

Dieser Betriebszustand ist für Feinschleifarbeiten vorgesehen. Bei Linkslauf verdrehen sich die Ankerwelle und das zusätzliche Ausgleichsgewicht 14 um 180° zum Ausgleichsgewicht 13 und dem Antriebsexzenter 9 bzw. umgekehrt, wobei sich die Exzentrizität der außermittigen Bohrung 6 in der Ankerwelle verdoppelt und damit der Gesamtexzenter 2r verwirklicht ist: Dieser Betriebszustand ist in Fig. 4 festgehalten. Das zusätzliche Ausgleichsgewicht 14 weist jetzt in Richtung des Ausgleichsgewichts 13, so daß sich die Massen addieren : $M_A = 3/2 + 1/2 = 2$.

Während in diesem Fall die Ausgleichsmassenachse identisch ist mit der Achse der Ankerwelle, tritt bei Rechtslauf der Ankerwelle eine Verschiebung der Ausgleichsmassenachse zur Ankerwellenachse um den Betrag r auf. Es hat sich gezeigt, daß diese Verschiebung praktisch vernachlässigbar ist. Erforderlichenfalls kann jedoch eine geeignete Kompensation vorgenommen werden.

Wie die Figuren 5 und 6 erkennen lassen, kann das zusätzliche Ausgleichsgewicht 14 auch drehbar im Ausgleichsgewicht 13 gelagert sein. Dabei begrenzt der Anschlag 22 des zusätzlichen Ausgleichsgewichts 14 die Relativbewegung der beiden Ausgleichsgewichte zueinander auf 180°. Bei Rechtsdrehung der Ankerwelle bewegt sich das zusätzliche Ausgleichsgewicht 14 bis zur Anlage an der Vertiefung 21 in der Stirnseite 13' des Ausgleichsgewichts 13.

Die Masse des zusätzlichen Ausgleichsgewichts 14 subtrahiert sich dabei von der Masse des Ausgleichsgewichts 13. Bei Linkslauf verdreht sich das zusätzliche Ausgleichsgewicht 14 um 180°, so daß sich die beiden Massen addieren. In diesem Fall läuft der Anschlag 22 des zusätzlichen Ausgleichsgewichts auf die Stirnseite 13' des Ausgleichsgewichts 13 auf.

Um bei Drehzahlschwankungen eine Relativbewegung der beiden Ausgleichsgewichte zueinander zu verhindern, ist eine Kugelrastung 23, 24 zur Lagefixierung der Ausgleichsgewichte vorgesehen.

Die Massenausgleichsgewichte sind so konzipiert, daß die resultierende Ausgleichskraft zumindest angenähert in der Schwerpunktebene der schwingenden Teile liegt, so daß ein Ausgleich der freien Momente erzielt wird.

Die Drehrichtungsumkehr erfolgt elektrisch durch Rechts/Links-Schaltung. Desgleichen erfolgt die Drehzahlreduzierung bei größerem Hub elektronisch beim Umschalten des Schwingschleifers in den Linkslauf.

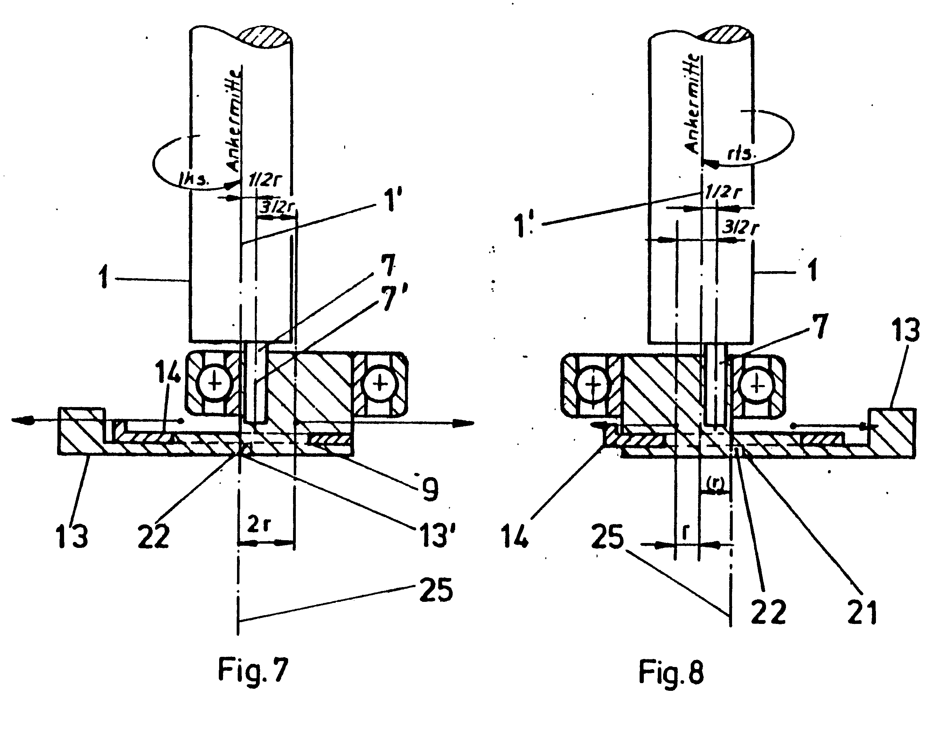

Im Falle der Figuren 7 und 8 ist der Exzenterzapfen 7 Bestandteil der Ankerwelle 1. Fig. 7 veranschaulicht dabei die Linkslaufposition des Exzenterzapfens 7 mit der Exzentrizität 1/2r und des Antriebsexzenters 9 mit der Exzentrizität 3/2r bezogen auf die Achse 7' des Exzenterzapfens, so daß sich bezogen auf die Ankerwellenachse 1' die resultierende Exzentrizität 2r ergibt, ferner die Lage des Ausgleichsgewichts 13 und des auf diesem aufliegenden, um den Hauptexzenter drehbaren Zusatzausgleichsgewicht 14. Die Achse der beiden Ausgleichsmassen ist hier identisch mit der Ankerwellenachse 1. Das Bezugszeichen 13' kennzeichnet die Stirnseite des Ausgleichsgewichts 13.

Die Rechtslaufposition dieser Bauteile ist in Fig. 8 festgehalten. Die resultierende Exzentrizität ist hier 3/2r — 1/2r = r. Um diesen Betrag ist auch die Ausgleichsmassenachse gegenüber der Ankerwellenachse 1 versetzt.

**Patentansprüche**

1. Schwingschleifer mit einer über elastische Elemente abgestützten Schleifplatte, die mittels eines durch die Ankerwelle des Antriebsmotors in Drehung versetzbaren, ein Ausgleichsgewicht enthaltenden Antriebsexzenters über ein auf diesem angebrachten Kugellager in eine Hin- und Herbewegung versetzbar ist, dadurch gekennzeichnet, daß der Antriebsexzenter (9) über einen ebenfalls exzentrisch zur Ankerwellenachse (1') liegenden Exzenterzapfen (7) angetrieben und die Ankerwelle (1) relativ zum Antriebsexzenter und dessen Ausgleichsgewicht (13) verschwenkbar ist, wobei der Verdrehwinkel zwischen Ankerwelle und Antriebsexzenter in beiden Drehrichtungen durch korrespondierende Anschläge (19, 20) an der Ankerwelle und dem Antriebsexzenter auf 180° begrenzt ist, und daß dem Ausgleichsgewicht des Antriebsexzenters ein Zusatzausgleichsgewicht (14) zugeordnet ist, das relativ zum Ausgleichsgewicht ebenfalls um 180° verdrehbar ist.

2. Schwingschleifer nach Anspruch 1, dadurch gekennzeichnet, daß die Ankerwelle eine zu ihrer Längsachse außermittig liegende Längsbohrung (6) aufweist, in welcher der mit dem Antriebsexzenter vereinigte Exzenterzapfen (7) verdrehbar und gegen axiales Verschieben gesichert geführt ist.

3. Schwingschleifer nach Anspruch 1, dadurch gekennzeichnet, daß der Exzenterzapfen (7) Bestandteil der Ankerwelle (1) ist und drehbar im Antriebsexzenter (9) geführt ist.

4. Schwingschleifer nach den Ansprüchen 1 bis 3, dadurch gekennzeichnet, daß die Exzentrizität des Exzenterzapfens (7) bezogen auf die Längsachse (1') der Ankerwelle 1/2r ist und die Exzentrizität des Antriebsexzenters (9) bezogen auf die Längsachse des Exzenterzapfens 3/2r beträgt.

5. Schwingschleifer nach den Ansprüchen 1 bis 4, dadurch gekennzeichnet, daß das zusätzliche Ausgleichsgewicht (14) fest auf der Ankerwelle (1) angeordnet ist.

6. Schwingschleifer nach den Ansprüchen 1 bis 4, dadurch gekennzeichnet, daß das Zusatzausgleichsgewicht (14) im Ausgleichsgewicht (13) des Antriebs Exzenters (9), drehbar gelagert und die Relativdrehung der beiden Ausgleichsgewichte durch einen Anschlag (22) in beiden Drehrichtungen auf 180° begrenzt ist.

7. Schwingschleifer nach Anspruch 6, dadurch gekennzeichnet, daß das Zusatzausgleichsgewicht in seiner jeweiligen Endlage (Rechts-Linkslauf) durch eine Rasteinrichtung (23, 24) selbsttätig fixiert wird.

8. Schwingschleifer nach den Ansprüchen 1 bis 7, dadurch gekennzeichnet, daß das Ausgleichsgewicht (13) des Antriebsexzenters und das auf der Ankerwelle angebrachte Zusatzausgleichsgewicht (14) ein Massenverhältnis von 3/2 : 1/2 aufweisen.

9. Schwingschleifer nach den Ansprüchen 1 bis 8, dadurch gekennzeichnet, daß sich der Exzenterhub der Schleifplatte bei der Drehrichtungsumschaltung des Schwingschleifers jeweils selbsttätig verändert.

10. Schwingschleifer nach Anspruch 9, dadurch gekennzeichnet, daß sich beim Umschalten des Schwingschleifers in die Drehrichtung mit größerem Exzenterhub die Drehzahl des Schwingschleiferantriebs selbsttätig vermindert.

11. Schwingschleifer nach den Ansprüchen 9 und 10, dadurch gekennzeichnet, daß die Vergrößerung des Exzenterhubs beim Umschalten des Schwingschleifers in den Linkslauf oder umgekehrt erfolgt.

## Claims

1. Orbital grinding machine having a grinding plate which is supported via resilient elements and which can be set in reciprocating motion by means of a driving eccentric which can be set in rotation by the armature shaft of the driving motor and contains a compensating weight, via a ball bearing fitted to this eccentric, characterised in that the driving eccentric (9) is driven through an eccentric pin (7) likewise situated eccentrically in relation to the axis (1') of the armature shaft and the armature shaft (1) is pivotal relative to the driving eccentric and its compensating weight (13), the angle of rotation between armature shaft and driving eccentric in both directions of rotation being limited to 180° by corresponding stops (19, 20) on the armature shaft and on the driving eccentric, and that associated with the compensating weight of the driving eccentric is an additional compensating weight (14) which can likewise be turned through 180° relative to the compensating weight.

2. Orbital grinding machine according to Claim 1, characterised in that the armature shaft comprises a longitudinal bore (6) which is situated eccentrically in relation to its longitudinal axis and in which the eccentric pin (7) integral with the driving eccentric can be turned and is guided held against axial displacement.

3. Orbital grinding machine according to Claim 1, characterised in that the eccentric pin (7) is part of the armature shaft (1) and is guided for rotation in the driving eccentric (9).

4. Orbital grinding machine according to Claims 1 to 3, characterised in that the eccentricity of the eccentric pin (7) in relation to the longitudinal axis (1') of the armature shaft is 1/2r and the eccentricity of the driving eccentric (9) in relation to the longitudinal axis of the eccentric pin is 3/2r.

5. Orbital grinding machine according to Claims 1 to 4, characterised in that the additional compensating weight (14) is fixedly mounted on the armature shaft (1).

6. Orbital grinding machine according to Claims 1 to 4, characterised in that the additional compensating weight (14) is mounted for rotation in the compensating weight (13) of the driving eccentric (9) and the relative rotation of the two compensating weights is limited to 180° in both directions of rotation by a stop (22).

7. Orbital grinding machine according to Claim 6, characterised in that the additional compensating weight is automatically locked in its particular end position (clockwise — counter-clockwise rotation) by a detent device (23, 24).

8. Orbital grinding machine according to Claim 1 to 7, characterised in that the compensating weight (13) of the driving eccentric and the additional compensating weight (14) fitted to the armature shaft have a mass ratio of 3/2 : 1/2.

9. Orbital grinding machine according to Claims 1 to 8, characterised in that the eccentric stroke of the grinding plate varies automatically each time when the direction of rotation of the vibratory grinder is switched over.

10. Orbital grinding machine according to Claim 9, characterised in that when the vibratory grinder is switched over into the direction of rotation with the greater eccentric stroke, the speed of rotation of the vibratory grinder drive is automatically reduced.

11. Orbital grinding machine according to Claims 9 and 10, characterised in that the increase in the eccentric stroke is effected when the vibratory grinder is switched over to counter-clockwise rotation or vice versa.

## Revendications

1. Ponceuse orbitale comprenant une plaque de ponçage qui prend appui par l'intermédiaire d'éléments élastiques et qui peut être déplacée d'un mouvement de va-et-vient au moyen d'un excentrique d'entraînement qui peut être entraîné en rotation par l'arbre d''induit du moteur d'entraînement et contient un contrepoids, par l'intermédiaire d''un roulement à billes monté sur l'excentrique en question, caractérisée en ce que l'excentrique d''entraînement (9) est entraîné par l'intermédiaire d'un tenon d'excentrique (7), également excentré par rapport à l'axe (1') de l'arbre d'induit et que l'arbre d'induit (1) peut pivoter par rapport à l'excentrique d'entraînement et à son contrepoids (13), l'angle de rotation entre l'arbre d'induit et l'excentrique d'entraînement étant limité à 180° dans les deux sens par des butées correspondantes (19, 20) ménagées sur l'arbre d'induit et sur l'excentrique d'entraînement et en ce qu'au contrepoids de l'excentrique d''entraînement est associé un contrepoids supplémentaire (14) qui peut également tourner de 180° par rapport au contrepoids.

2. Ponceuse orbitale selon la revendication 1, caractérisée en ce que l'arbre d'induit comporte un alésage longitudinal (6) qui est excentré par rapport à l'axe longitudinal de l'arbre et dans lequel le tenon d'excentrique (7) relié à l'excentrique d'entraînement est guidé de manière à pouvoir tourner sans pouvoir se déplacer dans le sens axial.

3. Ponceuse orbitale selon la revendication 1, caractérisée en ce que le tenon d'excentrique (7) fait partie de l'arbre d'induit (1) et est guidé de manière à pouvoir tourner dans l''excentrique d'entraînement (9).

4. Ponceuse orbitale selon l'une des revendications 1 à 3, caractérisée en ce que l'excentricité du tenon d'excentrique (7) par rapport à l'axe longitudinal (1') de l'arbre d'induit est de 1/2 r et que l'excentricité de l'excentrique d'entraînement (9) par rapport à l'axe longitudinal du tenon d'excentrique est de 3/2 r.

5. Ponceuse orbitale selon l'une des revendications 1 à 4, caractérisée en ce que le contrepoids supplémentaire (14) est solidement fixé à l'arbre d'induit (1).

6. Ponceuse orbitale selon l'une des revendications 1 à 4, caractérisée en ce que le contrepoids supplémentaire (14) est monté de manière à pouvoir tourner à l'intérieur du contrepoids (13) de l'excentrique d'entraînement (9) et en ce que le mouvement de rotation relatif des deux contrepoids est limité à 180° dans les deux sens par une butée (22).

7. Ponceuse orbitale selon la revendication 6, caractérisée en ce que le contrepoids supplémentaire est fixé automatiquement dans sa position terminale (à droite ou à gauche) par un dispositif de blocage (23, 24).

8. Ponceuse orbitale selon l'une des revendications 1 à 7, caractérisée en ce que le contrepoids (13) de l'excentrique d'entraînement et le contrepoids supplémentaire (14) monté sur l'arbre d'induit sont dans un rapport de poids de 3/2 à 1/2.

9. Ponceuse orbitale selon l'une des revendications 1 à 8, caractérisée en ce que la course d'excentrique de la plaque de ponçage varie automatiquement au moment du changement de direction de la ponceuse orbitale.

10. Ponceuse orbitale selon la revendication 9, caractérisée en ce qu'au moment où la ponceuse orbitale change de sens de rotation avec augmentation de la course d'excentrique, la vitesse angulaire du dispositif d'entraînement de la ponceuse orbitale diminue automatiquement.

11. Ponceuse orbitale selon les revendications 9 et 10, caractérisée en ce que l'augmentation de la course d'excentrique s'effectue au moment où la ponceuse orbitale change de sens pour se déplacer vers la gauche ou inversement.

FIG.1

FIG.2

FIG.3

0 195 019

FIG. 4

FIG. 5

FIG. 6

0 195 019

Fig. 8

Fig. 7